## Europäisches Patentamt
## European Patent Office
## Office européen des brevets

(19)

(11) Veröffentlichungsnummer: **0 233 517**
**B1**

(12)

# EUROPÄISCHE PATENTSCHRIFT

(45) Veröffentlichungstag der Patentschrift:
09.05.90

(21) Anmeldenummer: **87101161.5**

(22) Anmeldetag: **28.01.87**

(51) Int. Cl.⁵: **D21B 1/32**, D21D 5/00

(54) Verfahren und Anlage zur Entfernung von Farbpartikeln aus einer aus Altpapier hergewonnenen Fasersuspension.

(30) Priorität: **19.02.86 DE 3605259**

(43) Veröffentlichungstag der Anmeldung:
**26.08.87 Patentblatt 87/35**

(45) Bekanntmachung des Hinweises auf die Patenterteilung:
**09.05.90 Patentblatt 90/19**

(84) Benannte Vertragsstaaten:
**AT DE FR GB IT**

(56) Entgegenhaltungen:
**EP-A- 0 036 328**
**CH-A- 448 026**
**DE-A- 2 908 660**
**DE-A- 3 116 905**
**GB-A- 2 033 784**

(73) Patentinhaber: **Hermann Finckh Maschinenfabrik GmbH & Co., Marktstrasse 185, D-7410 Reutlingen 1(DE)**

(72) Erfinder: **Holz, Emil, Metzingerstrasse 51, D-7412 Eningen(DE)**

(74) Vertreter: **Hoeger, Stellrecht & Partner, Uhlandstrasse 14 c, D-7000 Stuttgart 1(DE)**

## Beschreibung

Die Erfindung betrifft ein Verfahren zur Entfernung von Farbpartikeln aus einer aus Altpapier gewonnenen Fasersuspension durch Sortieren, Auswaschen und Flotieren der Fasersuspension; ferner betrifft die Erfindung eine Anlage zur Durchführung eines derartigen Verfahrens.

Wenn Altpapier Zeitungen, Illustrierte und anderes bedrucktes Papier, Kartonagen und dergleichen enthält, so müssen zur Rückgewinnung des Fasermaterials die Druckfarben entfernt werden. Hierzu können dem Stand der Technik zwei Verfahren entnommen werden, nämlich das Deinking-Waschverfahren und das Deinking-Flotationsverfahren. Beim Deinking-Waschverfahren wird das Altpapier zunächst unter Zugabe von Deinking-Chemikalien in einem Stofflöser aufgelöst und durch Sortieren von die nachfolgende Behandlung störenden Verunreinigungen befreit. Dann werden die von den Druckfarben gebildeten Farbpartikel in einem offenen Wäscher, z.B. einem sogenannten Schrägwandwäscher, aus dem Fasermaterial ausgewaschen, worauf das die Farbpartikel enthaltende Waschwasser durch Flotation wieder aufbereitet wird.

Das Fasermaterial unterwirft man dann einem Bleichvorgang. Nachteilig am Deinking-Waschverfahren ist nicht nur der hohe Wasserverbrauch, sondern die verhältnismäßig hohen Faserverluste, die bis zu 35 % betragen können. Das Deinking-Waschverfahren eignet sich aber auch zur Druckfarbenentfernung aus Holzstoff-freiem Altpapier, welches beim Deinking-Flotationsverfahren Schwierigkeiten bereitet, weil die Zellstoffasern zum Flocken neigen und deshalb beim Flotieren teilweise selbst zusammen mit den Farbpartikeln abgeschieden werden.

Das Deinking-Flotationsverfahren führt zu geringeren Faserverlusten und erfordert nicht so hohe Investitions- und Betriebskosten wie das Deinking-Waschverfahren. Auch beim Deinking-Flotationsverfahren wird das Altpapier zunächst in einem Stofflöser aufgelöst, wobei die Druckfarben durch Chemikalien sowie unter dem Einfluß von Wärme und mechanischen Kräften vom Fasermaterial abgelöst werden. Nach dem Entfernen von die spätere Behandlung störenden Verunreinigungen durch Sortieren sowie mittels eines Hydrozyklons oder dergleichen wird die Fasersuspension durch eine Flotationseinrichtung geleitet, um die Druckfarbeteilchen von den Fasern zu trennen; man macht hierbei von der unterschiedlichen Benetzbarkeit der Fasern und der abgelösten Druckfarbeteilchen, bestehend aus Pigment und Bindemitteln, Gebrauch; um die abgelösten Druckfarbeteilchen durch Luftanlagerung flotieren zu können, müssen die teilweise recht kleinen Partikel zu größeren Teilchen agglomeriert werden, was durch das Zusetzen von Seifen und ungesättigten Fettsäuren geschieht, die mit den Härtebildnern des Wassers und den Druckfarbepartikeln hydrophobe Flocken bilden, an die sich die beim Flotieren erzeugten Luftbläschen anlagern, so daß es zur Flotation der Druckfarbepartikel kommt.

Aus dem Vorstehenden ergibt sich, daß das Deinking-Flotationsverfahren dem Deinking-Waschverfahren hinsichtlich der Faserausbeute und der Kosten überlegen ist; dennoch sind die Chemikalien-Kosten auch beim Deinking-Flotationsverfahren sehr hoch, so daß der vorliegenden Erfindung die Aufgabe zugrunde lag, das vorteilhafte Deinking-Flotationsverfahren so zu verbessern, dass sich Chemikalien einsparen lassen, was beim Auflösen des Altpapiers nicht möglich ist (in diesem Punkt sind das Deinking-Waschverfahren und das Deinking-Flotationsverfahren weitgehend identisch), weshalb sich nur bei den für den Flotationsvorgang erforderlichen Chemikalien Einsparungen ins Auge fassen lassen.

Ausgehend von einem Verfahren der eingangs erwähnten Art läßt sich nun diese Aufgabe erfindungsgemäß dadurch lösen, daß die gesamte, zu reinigende Fasersuspension zunächst unter Druck ausgewaschen und gleichzeitig über ein Sieb solcher Feinheit geführt wird, daß sich ein gewaschener, den größten Teil oder insbesondere nahezu alle brauchbaren Fasern enthaltender erster Suspensionsteil vor dem Sieb (durch das Sieb zurückgehaltener Teil, im folgenden auch Spuckstoff genannt) und ein ausgewaschener, Farbpartikel und die restlichen Fasern sowie ggf. feinen Schmutz wie Füllstoffe enthaltender zweiter Suspensionsteil als Durchlauf (vom Sieb durchgelassener Teil, im folgenden auch Gutstoff genannt) ergeben, worauf der erste Suspensonsteil sortiert und der zweite Suspensionsteil durch Flotieren von den Farbpartikeln befreit wird. Grundgedanke der Erfindung ist es also, durch eine Druckwäsche nur noch einen sehr geringen Teil des Fasermaterials in die Flotation gelangen zu lassen, wodurch nicht nur die durch die Flotation bedingten Faserverluste, sondern auch die für das Flotieren erforderlichen Chemikalienmengen verringert werden; außerdem unterzieht man einen Teil der Fasersuspension, in dem die Farbpartikel angereichert sind, der Flotation, wodurch deren Wirkungsgrad erhöht wird, weil die aufsteigenden Luftbläschen öfter mit Farbpartikeln in Berührung kommen, ein weiterer Grund, weshalb man mit weniger Chemikalien für den Flotationsvorgang auskommt. Schließlich müssen auch weniger Energie und Investitionskosten aufgewendet werden, um zum selben Ergebnis zu kommen, wie wenn man die gesamte, zu reinigende Fasersuspension einer Flotation unterwerfen würde. Nach der Flotation können für gewisse Papiersorten unerwünschte Füllstoffe mit bekannten Verfahren aus dem Fasermaterial ausgewaschen werden.

Verfahren zur Entfernung von Farbpartikeln aus einer Fasersuspension, bei denen sowohl flotiert, als auch ausgewaschen wird, sind an sich bekannt (DE-A 2 908 660), jedoch wird bei diesen bekannten Verfahren entweder die gesamte zu behandelnde Fasersuspension der Flotation unterworfen und erst anschließend das Fasermaterial ausgewaschen, oder aber wird die zu behandelnde Fasersuspension durch einen Sortierer in einen ersten, alle langen Fasern und einen zweiten, alle kurzen Fasern enthaltenden Suspensionsteil aufgetrennt und der die langen Fasern enthaltende Suspensionsteil einem Flotationsvorgang, der die kurzen Fasern enthaltende Suspensionsteil einem Auswaschvorgang unterworfen. Ausgewaschen wird nicht unter Druck, sondern mittels eines sog. Schrägwandwäschers. Außerdem wird der die langen Fasern enthaltende Suspensionsteil einem Flotationsvorgang unterworfen, während bei dem erfindungsgemäßen Verfahren der durch Flotieren behandelte Suspensionsteil, wenn überhaupt, im wesentlichen nur kurze Fasern enthält, die das Sieb eher passieren als lange Fasern.

Da bei dem erfindungsgemäßen Verfahren sämtliche Fasern gewaschen werden, ergibt sich der für das Deinking-Waschverfahren typische Vorteil der Erzielung eines hellen Faserstoffs, die in der zu behandelnden Fasersuspension enthaltenen Zellstofffasern belasten den Flotationsvorgang mit ihrer Neigung zur Flockung nicht, da sie in dem gewaschenen ersten Suspensionsteil verbleiben, und ein Faserverlust durch den Waschvorgang wird vermieden, da nach dem Flotieren des ausgewaschenen, zweiten Suspensionsteils, d.h. dem Abtrennen der Farbpartikel, dieser Suspensionsteil eingedickt und dem Gutstoff des sortierten ersten Suspensionsteils hinzugefügt werden kann.

Das Waschen der zu reinigenden Fasersuspension erfolgt vorzugsweise in mehreren Stufen, ebenso wie das Flotieren des ausgewaschenen zweiten Suspensionsteils. Außerdem empfiehlt es sich, den gewaschenen ersten Suspensionsteil in mehreren Stufen mit von Stufe zu stufe zunehmender Sieb- oder Sortierfeinheit zu sortieren.

Bei einer bevorzugten Ausführungsform des erfindungsgemäßen Verfahrens wird beim Waschen der zu reinigenden Fasersuspension mit einem Sieb solcher Siebfeinheit gearbeitet, daß der Reinheitsgrad (max. Teilchengrösse) des zweiten Suspensionsteils demjenigen des ersten Suspensionsteils nach dem Sortieren des letzteren entspricht; dadurch erübrigt sich eine weitere Feinstsortierung des ausgewaschenen zweiten Suspensionsteils nach dem Flotieren, d.h. nach dem Abscheiden der Farbpartikel.

Auch empfiehlt es sich, den durch das Druckwaschen der Altpapierfasersuspension als erster Suspensionsteil erhaltenen und dann fein sortierten Gutstoff und den hinausgewaschenen und dann durch Flotieren gereinigten zweiten Suspensionsteil durch ein Filter auf eine höhere Stoffdichte zu bringen, d.h. einzudicken, und das Filtrat ganz oder teilweise als Waschwasser zum Waschen der zu reinigenden Fasersuspension zu verwenden.

Während des Waschens und Siebens der zu reinigenden Fasersuspension wird diese zweckmäßigerweise in Turbulenz versetzt, z.B. durch entsprechende Einleitung des Waschwassers in die Fasersuspension. Arbeitet man beim Sieben während des Waschens der zu reinigenden Fasersuspension mit einem zylindrischen Sieb, was sich als besonders vorteilhaft erwiesen hat, so empfiehlt es sich, die zu reinigende Fasersuspension während des Waschens in Rotation zu versetzen. Dann läßt sich durch die Einstellung der für den Auswaschvorgang verwendeten Waschwassermenge und/oder durch die Intensität der Rotation der zu reinigenden Fasersuspension der Anteil des ersten Suspensionsteils an der Gesamtmenge der zu reinigenden Fasersuspension einstellen, wobei es sich als besonders vorteilhaft erwiesen hat, diesen Anteil in Abhängigkeit vom Faseranteil, insbes. vom Anteil langer Fasern, der zu reinigenden Fasersuspension auf 10 % bis 70 % einzuregeln.

Durch dieselben Massnahmen lassen sich auch die Stoffdichte des ersten Suspensionsteils auf eine für eine Feinstsortierung optimal brauchbare Stoffdichte und insbesondere auf 0,8 % bis 1,5 % und die Stoffdichte des zweiten Suspensionsteils auf eine für das Flotieren optimal brauchbare Stoffdichte von insbesondere 1% bis 2% einstellen.

Sortiergeräte, in denen die zu verarbeitende Fasersuspension unter Druck über ein Sieb geführt und ihr dabei gleichzeitig Wasser zugeführt wird, sind bekannt. So beschreibt die CH-A 448 026 einen Drucksortierer mit einem Einlaß für die zu verarbeitende Fasersuspension, einem in einem Gehäuse aufrechtstehend angeordneten zylindrischen Siebkorb, einem in diesem angeordneten trommelförmigen Rotor, der an seinem Umfang Vorsprünge aufweist und um eine mit der Siebkorbachse zusammenfallende Achse in Drehung versetzt wird, einem Gutstoffauslaß für denjenigen Teil der Fasersuspension, der die Sieböffnungen passiert hat, und einem Spuckstoffauslaß für denjenigen Teil der Fasersuspension, der vom Siebkorb zurückgehalten wurde. Ein von einem ungefähr kreiszylindrischen Gehäuse des Drucksortierers und dem den Umfang des Rotors bildenden Rotormantel begrenzter Bereich wird von dem Siebkorb in einen ersten, inneren Ringraum zwischen Rotor und Siebkorb und einen zweiten, äußeren Ringraum zwischen Siebkorb und Gehäusewand unterteilt, wobei der innere, erste Ringraum mit dem Einlaß für die zu verarbeitende Fasersuspension kommuniziert und der Gutstoffauslaß in den zweiten, äußeren Ringraum mündet. Unterhalb des inneren, ersten Ringraums befindet sich ein Spuckstoffraum, in den der Spuckstoffauslaß mündet. Außerdem ist dieser bekannte Drucksortierer mit mehreren Verdünnungswasserleitungen versehen, die übereinander angeordnet und bezüglich der Rotorachse radial ausgerichtet sind, den zweiten, äußeren Ringraum und die Wand des Siebkorbs durchqueren und deren Mündungen mit der Innenfläche der Siebkorbwand bündig sind. Durch diese Verdünnungswasserleitungen wird der zu verarbeitenden Fasersuspension, welche den inneren, ersten Ringraum schraubenlinienförmig von oben nach unten durchströmt, Verdünnungswasser zugeführt, um ein Eindicken der Fasersuspension und des Spuckstoffs auf ihrem Weg von oben nach unten durch den ersten, inneren Ringraum hindurch zu verhindern (der zu verarbeitenden Fasersuspension bzw. dem Spuckstoff wird ja auf diesem Weg durch die Öffnungen des Siebkorbs hindurch zusammen mit den Fasern laufend auch Wasser entzogen). Bei diesem bekannten Drucksortierer weisen die Öffnungen des Siebkorbs eine solche Größe auf, daß zumindest der größte Teil der vereinzelten, brauchbaren Faser der zu verarbeitenden Fasersuspension die Sieböffnungen passiert und über den Gutstoffauslaß den Drucksortierer verläßt, während in den Spuckstoffraum und damit in den Spuckstoffauslaß nur Verunreinigungen und Faserzusammenballungen (sogenannte Stippen) gelangen.

Zur Durchführung des erfindungsgemäßen Verfahrens wird nun eine Anlage vorgeschlagen, welche zwar einen Drucksortierer mit einem Sieb, einem Einlaß für die zu verarbeitende Fasersuspension, einem Wasseranschluß für eine Zufuhr von Wasser zu der zu verarbeitenden Fasersuspension, einem Spuckstoffauslaß und einem Gutstoffauslaß besitzt, wobei jedoch erfindungsgemäß der Drucksortierer eine Wascheinrichtung mit dem Wasseranschluß als Waschwasseranschluß bildet und der Spuckstoffauslaß mit einer Sortiereinrichtung und der Gutstoffauslaß mit einer Flotationseinrichtung verbunden ist. Dadurch erzielt man einen besonders intensiven Waschvorgang mit gleichzeitig sehr guter Sortierung.

Um leicht eine optimale Aufteilung der zu reinigenden Fasersuspension in einen gewaschenen ersten und in einen ausgewaschenen zweiten Suspensionsteil sowie optimale Stoffdichten für die Weiterverarbeitung einstellen zu können, empfiehlt sich besonders ein Drucksortierer der aus der CH-A 448 026 bekannten Bauart, welcher zwischen einem ersten Ringraum für die zu reinigende Fasersuspension sowie für den ersten Suspensionsteil und einem zweiten Ringraum für den zweiten Suspensionsteil einen Siebzylinder aufweist und im ersten Ringraum einen Rotor mit zum Siebzylinder konzentrischer Drehachse besitzt; durch Wahl der Rotordrehzahl und/oder der dem Drucksortierer zugeführten Waschwassermenge lassen sich dann optimale Verhältnisse einstellen, auch bezüglich der erwähnten turbulenten Strömungsverhältnisse in der zu reinigenden Fasersuspension.

Einzelheiten der Erfindung ergeben sich aus den beigefügten Ansprüchen und/oder aus der nachfolgenden Beschreibung sowie der beigefügten zeichnerischen Darstellung einer besonders vorteilhaften Ausführungsform der erfindungsgemäßen Anlage sowie ihrer Betriebsweise; in der Zeichnung zeigen:

Fig. 1A und 1B eine in zwei Teile aufgeteilte schematische Darstellung der Anlage;
Fig. 2: einen vertikalen Axialschnitt durch den für den Waschvorgang eingesetzten Drucksortierer der Anlage, und
Fig. 3: einen Schnitt nach der Linie 3-3 in Fig. 2.

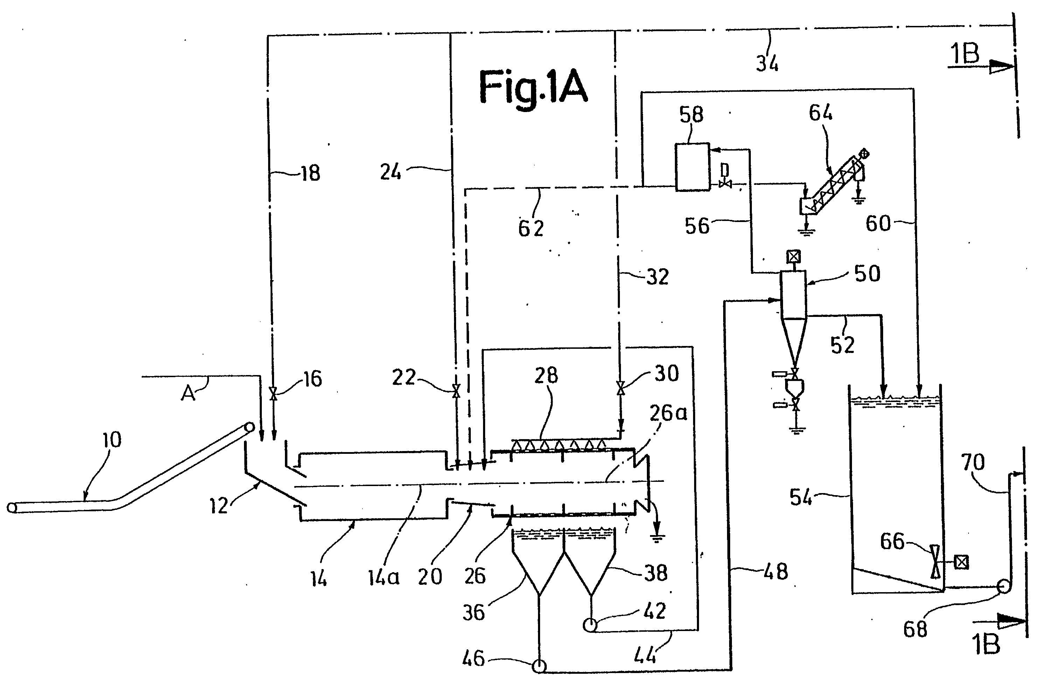

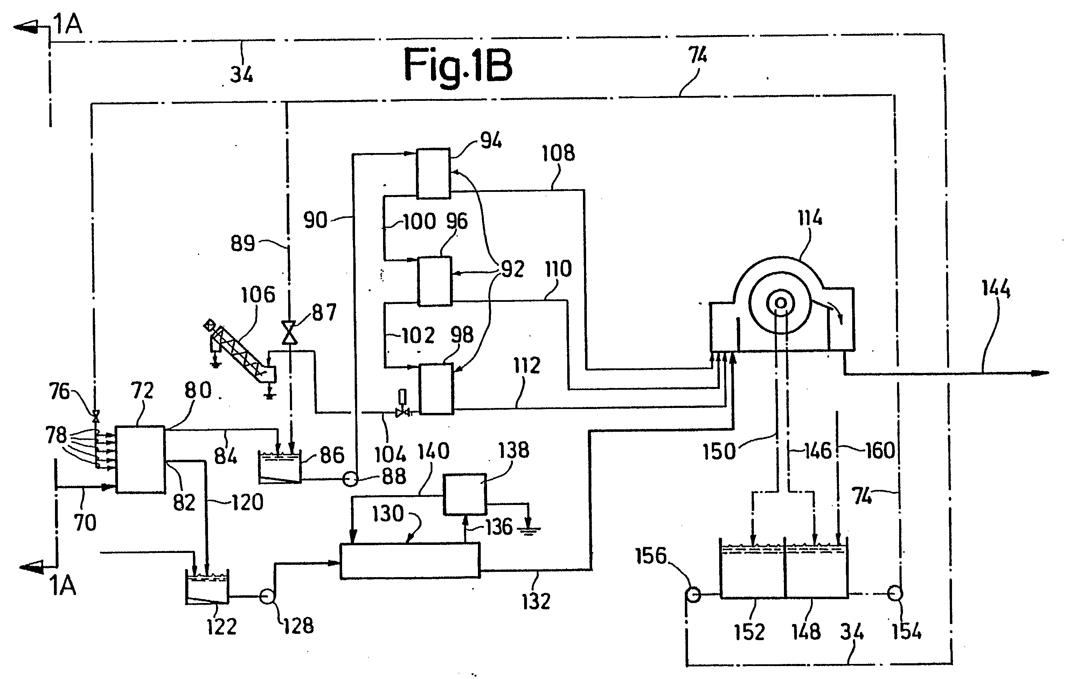

Wie sich der Fig. 1 entnehmen läßt, wird das Altpapier, aus dem brauchbare Fasern zurückgewonnen werden sollen, über ein Förderband 10 in einen Einfülltrichter 12 einer Einweich- und Auflösetrommel 14 gegeben. Bei dieser Einweich- und Auflösetrommel 14 handelt es sich um eine um die Trommelachse 14a in Drehung zu versetzende zylindrische Trommel mit kreisrundem Querschnitt und nicht-perforiertem Trommelmantel, wie sie zum Einweichen und Auflösen von Altpapier bekannt ist (sh. DE-A 2 941 898 der Anmelderin), so daß sich eine detaillierte Beschreibung dieser Trommel erübrigt. Nachzutragen ist nur noch, daß über den Einfülltrichter 12 auch Auflöse- und Deinking-Chemikalien (sh. Pfeil A) und vermittels einer mit einem Ventil 16 versehenen Wasserleitung 18 Einweichwasser in die Einweich- und Auflösetrommel 14 eingeleitet werden.

Nachdem das Altpapier hinreichend eingeweicht und durch ständiges Anheben und Herabgleiten in der rotierenden Trommel 14 aufgelöst wurde, gelangt es im Zuge des Durchlaufs durch die Anlage in einen Mischer 20, in dem die Stoffdichte des aufgelösten Fasermaterials durch Zusetzen von Wasser so weit herabgesetzt wird, daß sich eine sortierfähige Fasersuspension ergibt. Zu diesem Zweck führt eine mit einem Ventil 22 versehene Wasserleitung 24 zum Mischer 20. Nach dem Durchlaufen des Mischers gelangt die Fasersuspension in einen Sortierzylinder 26, der sich um eine Achse 26a dreht und einen als Siebblech ausgebildeten Trommelmantel besitzt. Dieser wird über ein Spritzrohr 28 ständig gereinigt, und zu diesem Zweck ist das Spritzrohr über eine mit einem Ventil 30 versehene Wasserleitung 32 an eine zentrale Wasserleitung 34 angeschlossen. Auch der Sortierzylinder 26 muß nicht im einzelnen beschrieben werden, da er sich von der Trommel 14 im wesentlichen nur nur dadurch unterscheidet, daß der Trommelmantel mit Sieböffnungen versehen ist. Unterhalb des Sortierzylinders sind in Richtung der Zylinderachse 26 hintereinander zwei Bütten 36 und 38 angeordnet; in der ersten Bütte 36 wird der größte Teil des Gutstoffs, d.h. die brauchbaren Fasern, in Form einer Fasersuspension aufgefangen, während die zweite Bütte 38 dem Auffangen des Waschwassers dient, mit dem von dem im Innern des Sortierzylinders verbliebenen Spuckstoff die noch brauchbaren Fasern abgewaschen werden - zu diesem Zweck läßt sich z.B. mit Hilfe des Spritzrohrs 28 Waschwasser in den Sortierzylinder 26 einbringen. Der so gewaschene Spuckstoff verläßt durch das rechte offene Ende des Sortierzylinders 26 die Anlage. Die in der zweiten Bütte 38 aufgefangene Fasersuspension wird über eine Pumpe 42 und eine Leitung 44 in den Mischer 20 zurückgeführt, während der Gutstoff aus der Bütte 36 mit Hilfe einer Pumpe 46 abgezogen und über eine Leitung 48 einem Sortiergerät 50 zugeführt wird, welches der Vorreinigung der Fasersuspension dient und unter der Bezeichnung »Cyclo-Screen« von der Firma Hermann Finckh Maschinenfabrik GmbH & Co. angeboten wird. Das vorgereinigte und das Sortiergerät 50 über eine Leitung 52 verlassende Gutstoff gelangt in einen Stapelturm 54, der Spuckstoff des Sortiergeräts 50 wird über eine Leitung 56 einem weiteren Sortiergerät 58 zugeführt, dessen Gutstoffauslaß entweder über eine Leitung 60 mit dem Stapelturm 54 in Verbindung steht oder über eine gestrichelt angedeutete Leitung 62 mit dem Mischer 20. Der Spuckstoff des Sortiergeräts 58 wird in ein Entwässerungsschneckengerät 64 gegeben.

An die Stelle des Stapelturms 54 kann auch ein anderer Stapelbehälter, wie eine Stapelbütte, treten, und in einem derartigen Stapelbehälter wird der Gutstoff mit einer Stoffdichte von ca. 4% bis ca. 15% gelagert.

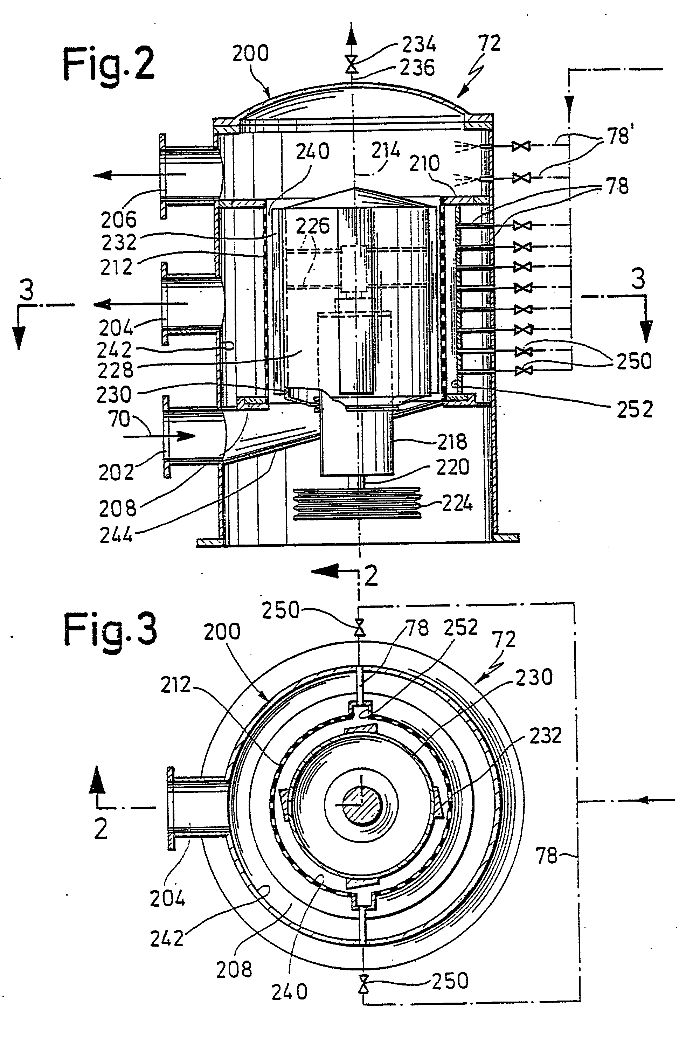

Im Stapelturm 54 bzw. der Stapelbütte wird das Fasermaterial mittels eines Umwälzpropellers 66 homogenisiert, ehe die Fasersuspension mittels einer Pumpe 68 aus dem Stapelturm abgezogen und über eine Leitung 70 einem als Ganzes mit 72 bezeichneten Waschgerät zugeführt, d.h. unter Druck in dieses Waschgerät gefördert wird, bei dem es sich um ein bis auf die Anschlüsse geschlossenes Gerät handelt, so daß die Fasersuspension unter Druck mit Waschwasser gewaschen werden kann. Eine bevorzugte Ausführungsform dieses Waschgeräts soll später anhand der Figuren 2 und 4 beschrieben werden.

Eine Waschwasserleitung 74 verzweigt sich hinter einem Ventil 76 in mehrere Waschwasseranschlüsse 78, über die verschiedenen Zonen des Waschgeräts 72 Waschwasser unter Druck zugeführt wird.

Das Waschgerät 72 ist auf die Größe und/oder Form seiner Sieböffnungen wie ein Sortiergerät ausgebildet, welches einen ersten Auslaß 80 für den durch das Sieb des Waschgeräts 72 zurückgehaltenen Teil der Fasersuspension und einen zweiten Auslaß 82 für denjenigen Teil der Fasersuspension besitzt, welcher das Sieb des Waschgeräts 72 passieren konnte. Der erste Auslaß 80 ist über eine Leitung 84 mit einer Bütte 86 verbunden, von der der gewaschene Fasersuspensionsteil über eine Pumpe 88 und eine Leitung 90 einer als Ganzes mit 92 bezeichneten Sortiereinrichtung zugeführt wird. Da die Reinigung des Fasermaterials im Waschgerät 72 umso besser und vollständiger ist, je mehr Wasser der Fasersuspension über das Sieb des Waschgeräts entzogen wird, sieht die bevorzugte Ausführungsform eine mit einem Ventil 87 versehene Verdünnungswasserleitung 89 vor, um den gewaschenen Fasersuspensionsteil wieder so zu verdünnen, daß er sortierfähig ist. Die Sortiereinrichtung 92 besteht bei der bevorzugten Ausführungsform aus drei Drucksortierern 94, 96 und 98, die so hintereinander geschaltet sind, daß eine Spuckstoffleitung 100 des ersten Drucksortierers 94 mit dem Einlaß des zweiten Drucksortierers 96 verbunden ist und eine Spuckstoffleitung 102 des zweiten Drucksortierers 96 zum Einlaß des dritten Drucksortierers 98 führt. Eine Spuckstoffleitung 104 des dritten Drucksortierers 98 führt zu einem Entwässerungsschneckengerät 106, während Gutstoffleitungen 108, 110 und 112 der drei Drucksortierer zu einem als Eindicker wirkenden Filter 114 führen. Vorzugsweise sind die Siebe der drei Drucksortierer 94, 96 und 98 mit Sortieröffnungen in Form von Schlitzen versehen, wobei es sich empfiehlt, folgende Schlitzweiten zu wählen: ca. 0,25 mm für den ersten Drucksortierer 94, ca. 0,20 mm für den zweiten Drucksortierer 96 und ca. 0,18 mm für den dritten Drucksortierer 98. Die Sortiereinrichtung 92 bewirkt also eine Feinstsortierung der im wesentlichen aus gewaschenen Fasern bestehenden Fasersuspension, die das Waschgerät 72 über den ersten Auslaß 80 verläßt.

Bei dem Filter 114 handelt es sich vorzugsweise um ein Scheibenfilter der Fa. Beloit oder um ein anderes Filtergerät mit sich langsam drehendem Filterelement, so daß sich auf dem letzteren ein Faservlies ausbilden kann.

Vom zweiten Auslaß 82 des Waschgeräts 72 führt eine Leitung 120 zu einer Bütte 122, in die also der ausgewaschene Teil der zu bearbeitenden Fasersuspension gelangt; dieser ausgewaschene Teil enthält neben Farbstoffpartikeln, Füllstoffen und anderen Feinstoffen auch noch brauchbare Fasern, die das Sieb des Waschgeräts 72 passieren konnten. Dabei empfiehlt es sich, die Sieböffnungen des Waschgeräts 72 so fein zu machen, daß die allermeisten Fasern vom Sieb zurückgehalten werden und daß sich durch das Sieb derselbe Reinheitsgrad erzielen läßt wie mit der Sortiereinrichtung 92. Der ausgewaschene Suspensionsteil wird mit einer Pumpe 128 aus der Bütte 122 abgezogen und in eine als Ganzes mit 130 bezeichnete Flotationsanlage gefördert, bei der es sich um eine mehrstufige Flotationsanlage handeln kann, wie sie z.B. von der Firma J.M. Voith GmbH, 7920 Heidenheim, Bundesrepublik Deutschland, bezogen werden kann, so daß es sich erübrigt, diese Flotationsanlage im einzelnen zu beschreiben. In dieser Flotationsanlage werden Farbpartikel abgetrennt, und zwar durch Luftbläschen nach oben geschwemmt, wo sie einen Schaum bilden. Eine gereinigte Fasersuspension kann unten über eine Leitung 132 aus der Flotationsanlage abgezogen werden. Von den Farbpartikeln und anderen flotierten Bestandteilen, die oben über Leitung 136 die Flotationsanlage verlassen, wird vorteilhafterweise die Flüssigkeit durch eine Zentrifuge 138 abgetrennt und über eine Leitung 140 der Flotationsanlage 130 wieder zugeführt. Die Leitung 132 führt zum Eindicker oder Filter 114, den eine eingedickte, gereinigte Fasersuspension mit einer Stoffdichte von insbesondere ca. 10% bis ca. 12% über eine Leitung 144 verläßt.

Klares Filtrat, welches den Filter 114 über eine Leitung 146 verläßt, wird in einem Behälter 148 aufgefangen, trübes Filtrat, welches den Filter 114 über eine Leitung 150 verläßt, gelangt in einen Behälter 152. Das klare Filtrat wird über eine Pumpe 154 in die Waschwasserleitung 74 gespeist, das trübe Filtrat über eine Pumpe 156 in die zentrale Wasserleitung 34. Erforderlichenfalls kann in den Behälter 148 noch eine Frischwasserleitung 160 münden.

Dem Waschgerät 72 wird vorteilhafterweise so viel Waschwasser zugeführt, bis die Fasern der das Gerät über den ersten Auslaß 80 verlassenden gewaschenen Suspension den gewünschten Weißgrad erreichen. Die Feinstsortierung mit Hilfe der Sortiereinrichtung 92 dient dem Zweck, aus dieser gewaschenen Suspension die noch störenden Schmutz- und Kleberteile, die größer als Farbpartikel, Füllstoffe und Feinstoffe sind, zu entfernen. Nach dem Eindicken im Filter 114 kann die gereinigte und eingedickte Fasersuspension einer weiteren Behandlung zugeführt werden, z.B. einer Dispergierung, um noch vorhandenen Feinschmutz fein zu verteilen. Durch die Einstellung der dem Waschgerät 72 zugeführten Waschwassermenge läßt sich die Stoffdichte der das Waschgerät 72 über den ersten Auslaß 80 verlassenden gewaschenen Fasersuspension so weit herabsetzen, daß sich mit bekannten Sortiergeräten, also im vorliegenden Fall mit der Sortiereinrichtung 92, eine Feinstsortierung durchführen läßt.

Besonders bevorzugt wird eine Verfahrensführung, bei der die zu reinigende Fasersuspension in mehrere Stufen nacheinander mehrfach unter Druck ausgewaschen wird und bei der die gewaschene Suspension, die das Waschgerät 72 bzw. die Waschgeräte über den ersten Auslaß 80 verläßt, ca. 50% der gesamten, über die Leitung 70 angeförderten Fasersuspension beträgt.

Anhand der Figuren 2 und 3 soll nun die bevorzugte Ausführungsform des erfindungsgemässen Wasch- und Sortiergeräts 72 näher erläutert werden.

Wie bereits erwähnt, handelt es sich dabei um ein Waschgerät in Form eines sog. Drucksortierers, d.h. um ein Sortiergerät mit einem bis auf verschiedene Ein- und Auslässe geschlossenen Gehäuse 200, welches unten einen Zulaufstutzen 202, in der Mitte einen Gutstoff-Auslaßstutzen 204 und oben einen Spuckstoffauslaßstutzen 206 besitzt. Mit Hilfe von Tragringen 208 und 210 ist im Gehäuse ein Siebzylinder 212 konzentrisch zu einer Gehäuseachse 214 angebracht, und in nicht näher dargestellter Weise wurde im Gehäuse auch eine Lagerung 218 für eine Rotorwelle 220 montiert, u.z. derart, daß die Drehachse der Rotorwelle 220 mit der Gehäuseachse 214 zusammenfällt. Am unteren Ende der Rotorwelle 220 ist eine Riemenscheibe 224 befestigt, über die sich die Rotorwelle antreiben läßt. Am oberen Ende der Rotorwelle sind sternförmig Tragarme 226 befestigt, an denen wiederum ein einen geschlossenen Hohlkörper bildender Rotor 228 befestigt ist. Dieser besitzt einen kreiszylindrischen Mantel 230, auf den aussen Leisten 232 aufgesetzt sind, die bei sich drehendem Rotor in der Fasersuspension, u.z. in der Nähe des Siebzylinders 212, Druckstöße erzeugen, welche ein Zusetzen der Öffnungen des Siebzylinders 212 durch Fasern und/oder Schmutz verhindern. Oben besitzt das Gehäuse 200 eine mittels eines Ventils 234 verschließbare Entlüftung 236.

Der Siebzylinder 212 bildet zusammen mit dem Rotormantel 230 einen inneren, ersten Ringraum 240 und zusammen mit dem Gehäuse 200 einen äußeren, zweiten Ringraum 242, wobei der letztere oben und unten durch die Tragringe 208 und 210 verschlossen ist. Ein schräger Gehäuseboden 244 führt vom Zulaufstutzen 202 zum unteren Ende des inneren, ersten Ringraums 240.

Die mit jeweils einem Ventil 250 versehenen Waschwasserzulaufleitungen 78 münden auf der Innenseite des Siebzylinders 212; dabei hat es sich als vorteilhaft erwiesen, den Siebzylinder mit mindestens einem nutartigen Waschwasserkanal 252 zu versehen, welcher nach außen über den Siebzylinder übersteht, um das Umlaufen der Rotorleisten 232 nahe an der Innenseite des Siebzylinders nicht zu behindern, und der in das Innere des Siebzylinders hinein geöffnet ist. Wie sich aus Fig. 3 ergibt, besitzt die bevorzugte Ausführungsform des erfindungsgemäßen Waschgeräts zwei einander gegenüberliegende Waschwasserkanäle 252 - in Fig. 2 wurde der eine der beiden Waschwasserkanäle nach einer Drehung um 90° gezeichnet. In jeden Waschwasserkanal münden nun übereinander und in vertikalem Abstand voneinander mehrere der Waschwasserzulaufleitungen 78.

Über die an den Zulaufstutzen 202 angeschlossene Leitung 70 wird die durch das Waschverfahren zu reinigende Fasersuspension in den inneren Ringraum 240 eingeleitet und mit Waschwasser gewaschen. Farbpartikel, im Papier enthaltene Füllstoffe sowie anderer feiner Schmutz passieren zusammen mit einigen kürzeren Fasern die Öffnungen des Siebzylinders 212 und gelangen in den äußeren Ringraum 242, den sie über den Auslaßstutzen 204 verlassen - dieser Stutzen wurde zuvor als Gutstoffauslaß bezeichnet, allerdings nur deshalb, weil bei Drucksortierern derjenige Teil der Fasersuspension, welcher das Sieb passiert hat, üblicherweise als Gutstoff bezeichnet wird. Der Auslaßstutzen 204 ist also mit dem zweiten Auslaß 82 aus Fig. 1 identisch. Ein anderer Teil der zu behandelnden Fasersuspension, der die gewaschenen Fasern enthält, d.h. also der gewaschene Suspensionsteil, gelangt vom inneren Ringraum 240 in den oberen Teil des Gehäuses 200 und verläßt dieses über den Auslaßstutzen 206 - dieser wurde vorstehend in Übereinstimmung mit der üblichen Bezeichnung bei Drucksortierern als Spuckstoffauslaß bezeichnet. Der Auslaßstutzen 206 ist also mit dem ersten Auslaß 80 aus Fig. 1 identisch. Hier bleibt noch nachzutragen, daß es zweckmäßig sein kann, Waschwasserzulaufleitungen 78' auch in den oberen Teil des Gehäuses 200 münden zu lassen.

Durch Einstellung der über die Waschwasserzulaufleitungen 78 zugeführten Waschwassermengen sowie durch die Drehzahl des Rotors 228 läßt sich das Mengenverhältnis von ausgewaschenem Suspensionsteil und gewaschenem Suspensionsteil steuern; empfohlen wird, den Anteil des das Waschgerät 72 über den Auslaßstutzen 206 verlassenden gewaschenen Suspensionsteils auf ca. 50 % der behandelten Gesamtsuspension einzustellen, obwohl er in Abhängigkeit vom Faseranteil der zu reinigenden Suspension zwischen ca. 10 % und ca. 70 % der Gesamtsuspensionsmenge liegen kann.

Ferner wird empfohlen, die Parameter Waschwassermenge und Rotordrehzahl so zu wählen, daß die Stoffdichte des gewaschenen Suspensionsteils am Auslaßstutzen 206 zwischen ca. 0,8 % und ca. 1,5 % liegt, während die Stoffdichte des ausgewaschenen Suspensionsteils am Auslaßstutzen 204 zwischen ca. 1 % und ca. 2 % liegt. Nachdem im Stapelturm 54 der zu reinigende Faserstoff mit einer Stoffdichte gelagert wird, die vorzugsweise zwischen ca. 4 % und ca. 15 % liegt, können beim Waschen der Fasersuspension im Waschgerät 72 erhebliche Waschwassermengen zugeführt werden, um die vorstehend aufgeführten Stoffdichten für den gewaschenen und den ausgewaschenen Suspensionsteil zu erhalten.

## Patentansprüche

1. Verfahren zur Entfernung von Farbpartikeln aus einer aus Altpapier gewonnenen Fasersuspension durch Sortieren, Auswaschen und Flotieren der Fasersuspension, dadurch gekennzeichnet, daß die gesamte, zu reinigende Fasersuspension unter Druck ausgewaschen und gleichzeitig über ein Sieb (212) solcher Siebeinheit geführt wird, daß sich ein gewaschener, nahezu alle brauchbaren Fasern enthaltender erster Suspensionsteil vor dem Sieb (212) und ein ausgewaschener, Farbpartikel und Faserreste enthaltender zweiter Suspensionsteil als Durchlauf ergeben, und daß der erste Suspensionsteil sortiert und der zweite Suspensionsteil durch Flotieren von den Farbpartikeln befreit wird.

2. Verfahren nach Anspruch 1, dadurch gekennzeichnet, daß durch Flotieren abgesonderte Verunreinigungen durch Zentrifugieren eingedickt und dabei gewonnene Flüssigkeit zurückgeführt wird.

3. Verfahren nach Anspruch 1, dadurch gekennzeichnet, daß die zu reinigende Fasersuspension während des Waschens in Turbulenz und Rotation versetzt wird.

4. Verfahren nach Anspruch 1, dadurch gekennzeichnet, daß der erste Suspensionsteil in mehreren Stufen, (94, 96, 98) mit von Stufe zu Stufe zunehmender Siebfeinheit sortiert wird.

5. Verfahren nach Anspruch 1, dadurch gekennzeichnet, daß der durch das Druckwaschen der Altpapierfasersuspension als erster Suspensionsteil erhaltene und dann feinsortierte Gutstoff und der hinausgewaschene und dann durch Flotieren gereinigte zweite Suspensionsteil durch ein Filter, (114) auf eine höhere Stoffdichte gebracht und das Filtrat zumindest teilweise als Waschwasser zum Auswaschen verwendet wird.

6. Verfahren nach einem oder mehreren der vorstehenden Ansprüche, dadurch gekennzeichnet, daß durch die Einstellung der für den Auswaschvorgang verwendeten Waschwassermenge und/oder der Intensität der Rotation der zu reinigenden Fasersuspension der Anteil des ersten Suspensionsteils an der Gesamtmenge der zu reinigenden Fasersuspension in Abhängigkeit vom Faseranteil in der letzteren auf 10% bis 70%, vorzugsweise auf ca. 50% eingeregelt wird.

7. Verfahren nach Anspruch 1, dadurch gekennzeichnet, daß die Stoffdichte des ersten Suspensionsteils auf eine für eine Feinstsortierung optimal brauchbare Stoffdichte und insbesondere auf 0,8% bis 1,5% eingestellt wird.

8. Verfahren nach Anspruch 1, dadurch gekennzeichnet, dass die Stoffdichte des zweiten Suspensionsteils auf eine für das Flotieren optimal brauchbare Stoffdichte und insbesondere auf 1% bis 2% eingestellt wird.

9. Anlage zur Durchführung des Verfahrens nach Anspruch 1, welche einen Drucksortierer (72) mit einem Sieb (212), einem Einlaß (70 bzw. 202) für die zu verarbeitende Fasersuspension, einem Wasseranschluß (78) für die Zufuhr von Wasser zu der zu verarbeitenden Fasersuspension, einem Spuckstoffauslaß (80 bzw. 206) und einem Gutstoffauslaß (82 bzw. 204) besitzt, dadurch gekennzeichnet, daß der Drucksortierer (72) eine Wascheinrichtung mit dem Wasseranschluß (78) als Waschwasseranschluß bildet und daß der Spuckstoffauslaß (80 bzw. 206) mit einer Sortiereinrichtung (92) und der Gutstoffauslaß (82 bzw. 204) mit einer Flotationseinrichtung (130) verbunden ist.

10. Anlage nach Anspruch 9, dadurch gekennzeichnet, daß der Drucksortierer (72), zwischen einem ersten Ringraum (240) für die zu reinigende Fasersuspension sowie für den ersten Suspensionsteil und einem zweiten Ringraum (242) für den zweiten Suspensionsteil einen Siebzylinder (212) aufweist und daß im ersten Ringraum ein Rotor (228) mit zum Siebzylinder konzentrischer Drehachse (214) angeordnet ist.

11. Anlage nach Anspruch 10, dadurch gekennzeichnet, daß der Waschwasseranschluß (78) in den ersten Ringraum (240) mündet.

12. Anlage nach einem oder mehreren der Ansprüche 9 bis 11, dadurch gekennzeichnet, daß die Sortierfeinheit des Drucksortierers (72) der höchsten Sortierfeinheit der Sortiereinrichtung (92) entspricht.

13. Anlage nach Anspruch 9, dadurch gekennzeichnet, daß der Rotor (228) als geschlossener Körper mit am Umfang vorgesehenen Vorsprüngen (232) ausgebildet ist.

14. Anlage nach Anspruch 9, dadurch gekennzeichnet, daß die Siebzylinderachse (214) stehend angeordnet ist und daß ein Zulauf (202) für die zu reinigende Suspension im Bereich des unteren Endes des ersten Ringraums (240) und der Spuckstoffauslaß (206) im Bereich des oberen Endes dieses Ringraums vorgesehen ist.

15. Anlage nach Anspruch 9, dadurch gekennzeichnet, daß der zweite Ringraum (242) den Siebzylinder (212) und den ersten Ringraum (240) umgibt.

16. Anlage nach Anspruch 15, dadurch gekennzeichnet, daß der Gutstoffauslass (204) auf der Außenseite des zweiten Ringraums (242) in dessen mittlerem Bereich angeordnet ist.

17. Anlage nach Anspruch 9, dadurch gekennzeichnet, daß der Waschwasseranschluß mehrere getrennt steuerbare Waschwasserauslässe (78) aufweist, welche übereinander und im Abstand voneinander längs des stehenden Siebzylinders (212) angeordnet sind.

18. Anlage nach Anspruch 9, dadurch gekennzeichnet, daß die Sortiereinrichtung (92) mehrere Sortiergeräte (94, 96, 98) mit Sieböffnungen unterschiedlicher Größe aufweist, welche bezüglich des Spuckstoffs mit abnehmender Sieböffnungsgröße hintereinandergeschaltet sind.

19. Anlage nach Anspruch 9, dadurch gekennzeichnet, daß die Sortiereinrichtung (92) einen mit einem Filtergerät (114) verbundenen Gutstoffauslaß (108, 110, 112) aufweist und daß ein den gereinigten zweiten Suspensionsteil führender Auslaß (132) der Flotationseinrichtung (130) gleichfalls mit dem Filtergerät verbunden ist.

20. Anlage nach Anspruch 9, dadurch gekennzeichnet, daß ein die abgesonderten Verunreinigungen führender Auslaß (136) der Flotationseinrichtung (130) mit einem Zentrifugiergerät (138) verbunden ist.

## Claims

1. Process for removing colour particles from a fibre suspension obtained from waste paper by sorting, washing-out and flotation of the fibre suspension, characterised in that the entire fibre suspension to be cleaned is washed-out under pressure and simultaneously passed over a screen (212) of such screening fineness as to obtain a washed, first suspension portion that contains almost all the usable fibres before the screen (212) and a washed-out, second suspension portion that has passed through and contains colour particles and the rest of the fibres, and in that the first suspension portion is sorted and the second suspension portion is freed from the colour particles by flotation.

2. Process according to claim 1, characterised in that impurities separated by flotation are thickened by centrifugation and liquid obtained thereby is fed back.

3. Process according to claim 1, characterised in that the fibre suspension to be cleaned is subjected to turbulence and rotation during the washing.

4. Process according to claim 1, characterised in that the first suspension portion is sorted in several stages (94, 96, 98) with screening fineness increasing from stage to stage.

5. Process according to claim 1, characterised in that the substance density of the accepted material obtained by washing the waste paper fibre suspension under pressure and then finely sorted and of the second suspension portion which has been washed-out and then cleaned by flotation is increased by a filter (114), and the filtrate is used at least partly as wash water for the washing-out.

6. Process according to one or several of the preceding claims, characterised in that the proportion of the first suspension portion is fixed in relation to the total amount of the fibre suspension to be cleaned in dependence upon the fibre component therein at 10% to 70%, preferably at approximately 50%, by setting the quantity of wash water used for the washing-out procedure and/or the intensity of the rotation of the fibre suspension to be cleaned.

7. Process according to claim 1, characterised in that the substance density of the first suspension portion is set at an optimum substance density for ultrafine sorting, in particular at 0.8% to 1.5%.

8. Process according to claim 1, characterised in that the substance density of the second suspension portion is set at an optimum substance density for the flotation, in particular at 1% to 2%.

9. Apparatus for performing the process according to claim 1 comprising a pressure sorter (72) with a screen (212), an inlet (70 and 202) for the fibre suspension to be processed, a water connection (78) for the addition of water to the fibre suspension to be processed, a rejected material outlet (80 and 206) and an accepted material outlet (82 and 204), characterised in that the pressure sorter (72) forms a washing apparatus with the water connection (78) as wash water connection, and in that the rejected material outlet (80 and 206) is connected to a sorting apparatus (92), and the accepted material outlet (82 and 204) to a flotation apparatus (130).

10. Apparatus according to claim 9, characterised in that the pressure sorter (72) comprises a screen cylinder (212) between a first annular space (240) for the fibre suspension to be cleaned and also for the first suspension portion and a second annular space (242) for the second suspension portion, and in that a rotor (228) is arranged in the first annular space with its axis of rotation (214) concentric with the screen cylinder.

11. Apparatus according to claim 10, characterised in that the wash water connection (78) opens into the first annular space (240).

12. Apparatus according to one or several of claims 9 to 11, characterised in that the sorting fineness of the pressure sorter (72) corresponds to the highest degree of sorting fineness of the sorting apparatus (92).

13. Apparatus according to claim 9, characterised in that the rotor (228) is in the form of a closed body with projections (232) provided on the circumference.

14. Apparatus according to claim 9, characterised in that the screen cylinder axis (214) is vertically arranged, and in that an inlet (202) for the suspension to be cleaned is provided in the region of the lower end of the first annular space (240) and the rejected material outlet (206) in the region of the upper end of this annular space.

15. Apparatus according to claim 9, characterised in that the second annular space (242) encloses the screen cylinder (212) and the first annular space (240).

16. Apparatus according to claim 15, characterised in that the accepted material outlet (204) is arranged on the outside of the second annular space (242) in the central region thereof.

17. Apparatus according to claim 9, characterised in that the wash water connection comprises several separately controllable wash water outlets (78) which are arranged in superimposed, spaced relation along the upright screen cylinder (212).

18. Apparatus according to claim 9, characterised in that the sorting apparatus (92) comprises several sorting devices (94, 96, 98) with screen openings of different size which are connected one behind the other with decreasing screen opening size with respect to the rejected material.

19. Apparatus according to claim 9, characterised in that the sorting apparatus (92) comprises an accepted material outlet (108, 110, 112) connected to a filter device (114), and in that an outlet (132) of the flotation apparatus (130) conveying the cleaned second suspension portion is similarly connected to the filter device.

20. Apparatus according to claim 9, characterised in that an outlet (136) of the flotation apparatus (130) conveying the separated impurities is connected to a centrifuge (138).

## Revendications

1. Procédé destiné à enlever, par tri, enlèvement par lavage, et flottation de la suspension fibreuse des particules colorées dans une suspension fibreuse récupérée à partir de vieux papiers, caractérisé en ce que la suspension fibreuse à nettoyer est lavée sous pression et simultanément amenée sur un tamis (212) d'une finesse de tamis telle qu'il se produit,. devant le tamis (212), une première partie de suspension lavée, contenant presque toutes les fibres utilisables, et, comme écoulement, une deuxième partie de suspension enlevée par lavage, contenant des particules colorées et des résidus fibreux, et en ce que la première partie de suspension est triée et que la deuxième partie de suspension est libérée, par flottation, des particules colorées.

2. Procédé selon la revendication 1, caractérisé en ce que des impuretés séparées par flottation sont épaissies par centrifugation et en ce qu'un liquide récupéré est de cette façon renvoyé.

3. Dispositif selon la revendication 1, caractérisé en ce que la suspension fibreuse à nettoyer est mise en turbulence et en rotation pendant le lavage.

4. Dispositif selon la revendication 1, caractérisé en ce que la première partie de suspension est triée en plusieurs étapes (94, 96 et 98), la finesse de tamis augmentant d'une étape à l'autre.

5. Procédé selon la revendication 1, caractérisé en ce que la pâte acceptée, obtenue en tant que première partie de suspension par le lavage sous pression de la suspension fibreuse de vieux papiers, puis triée finement, et la deuxième partie de suspension, enlevée par lavage puis nettoyée par flottation, sont amenées à travers un filtre (114) à une densité plus élevée et en ce que le filtrat est utilisé au moins partiellement comme eau de lavage pour le lavage d'évacuation.

6. Procédé selon une ou plusieurs des revendications précédentes, caractérisé en ce que le rapport entre la première partie en suspension et la quantité totale de suspension fibreuse à nettoyer est réglé, en fonction de la fraction fibreuse dans cette dernière, entre 10% et 70%, de préférence à 50% environ, par le réglage du débit d'eau de lavage utilisée pour le processus d'enlèvement par lavage et/ou de l'intensité de la rotation de la suspension fibreuse à nettoyer.

7. Procédé selon la revendication 1, caractérisé en ce que la consistance de la première partie de suspension est réglée en vue d'une consistance utilisable de façon optimale pour un tri des parties les plus fines et en particulier entre 0,8% et 1,5%.

8. Procédé selon la revendication 1, caractérisé en ce que la consistance de la deuxième partie de suspension est réglée en vue d'une consistance utilisable de façon optimale pour la flottation et en particulier entre 1% et 2%.

9. Installation destinée à la mise en oeuvre du procédé selon la revendication 1, qui comporte un dispositif de tri sous pression (72) comprenant un tamis (212), une entrée (70 ou 202) pour la suspension fibreuse à traiter, un raccordement d'eau (78) destiné à amener de l'eau à la suspension fibreuse à traiter, une sortie de matière entraînées (80 ou 206) et une sortie de pâte acceptée (82 ou 204), caractérisé en ce que le dispositif de tri sous pression (72) constitue un dispositif de lavage, le raccordement d'eau (78) servant de raccordement d'eau de lavage, et en ce que la sortie de matières entraînées (80 ou 206) est reliée à un dispositif de tri (92) et la sortie de pâte acceptée (82 ou 204) est reliée à un dispositif de flottation (130).

10. Installation selon la revendication 9, caractérisée en ce que le dispositif de tri sous pression (72) comporte un tamis cylindrique (212) entre un premier espace annulaire (240), destiné à la suspension fibreuse à nettoyer ainsi qu'à la première partie de suspension, et un deuxième espace annulaire (242), destiné à la deuxième partie de suspension, et en ce qu'un rotor (228), dont l'axe de rotation (214) est concentrique au tamis cylindrique, est disposé dans le premier espace annulaire.

11. Installation selon la revendication 10, caractérisée en ce que le raccordement d'eau de lavage (78) débouche dans le premier espace annulaire (240).

12. Installation selon l'une ou plusieurs des revendications 9 à 11, caractérisée en ce que la finesse de tri du dispositif de tri sous pression (72) correspond à la finesse de tri la plus élevée du dispositif de tri (92).

13. Installation selon la revendication 9, caractérisée en ce que le rotor (228) est d'une structure de corps fermé comportant des saillies (232) sur sa périphérie.

14. Installation selon la revendication 9, caractérisée en ce que l'axe (214) du tamis cylindrique est disposé verticalement, et en ce que la zone de l'extrémité inférieure du volume annulaire (240) comprend une amenée (202) destinée à la suspension à nettoyer et en ce que la zone de l'extrémité supérieure de cet espace annulaire comprend la sortie (206) des matières entraînées.

15. Installation selon la revendication 9, caractérisée en ce que le deuxième espace annulaire (242) entoure le tamis cylindrique (212) et le premier espace annulaire (240).

16. Installation selon la revendication 15, caractérisée en ce que la sortie de pâte acceptée (204) est disposée sur le côté extérieur du deuxième espace annulaire (242) dans la zone centrale de celui-ci.

17. Installation selon la revendication 9, caractérisée en ce que le raccordement d'eau de lavage comporte plusieurs raccordements d'eau de lavage (78) réglables de façon séparée, qui sont superposés à distance l'un de l'autre le long du tamis cylindrique (212).

18. Installation selon la revendication 9, caractérisée en ce que le dispositif de tri (92) présente plusieurs dispositifs de tri (94, 96 et 98) dont les ouvertures de tamis sont de dimensions différentes, et qui sont montés en série l'un après l'autre, les dimensions des ouvertures de tamis diminuant dans la direction du flux des matières entraînées.

19. Installation selon la revendication 9, caractérisée en ce que le dispositif de tri (92) comporte une sortie de pâte acceptée (108, 110, 112) reliée à un dispositif de filtre (114), et en ce qu'une sortie (132), qui amène la deuxième partie de suspension nettoyée au dispositif de flottation (130), est en même temps reliée au dispositif de filtre.

20. Installation selon la revendication 9, caractérisée en ce qu'une sortie (136), conduisant au dispositif de flottation (130) les impuretés séparées, est reliée à un dispositif de centrifugation (138).

Fig.1A

EP 0 233 517 B1

Fig.1B

EP 0 233 517 B1

# Fig.2

# Fig.3